Europäisches Patentamt

European Patent Office

Office européen des brevets

(11) Publication number: **0 345 738**
**A2**

# EUROPEAN PATENT APPLICATION

(21) Application number: **89110241.0**

(22) Date of filing: **06.06.89**

(51) Int. Cl.⁴: **G06F 15/16**

(30) Priority: **07.06.88 JP 141261/88**

(43) Date of publication of application:
**13.12.89 Bulletin 89/50**

(84) Designated Contracting States:
**DE FR GB**

(71) Applicant: **HITACHI, LTD.**
**6, Kanda Surugadai 4-chome**
**Chiyoda-ku Tokyo 101(JP)**

(72) Inventor: **Takeda, Katsumi**
**719-3, Hirasawa**
**Hadano-shi Kanagawa-ken(JP)**

(74) Representative: **Patentanwälte Beetz sen. -**
**Beetz jun. Timpe · Siegfried -**
**Schmitt-Fumian- Mayr**
**Steinsdorfstrasse 10**
**D-8000 München 22(DE)**

(54) **Multi-processor system.**

(57) Disclosed is a multi-processor system in which central processing units (10,20) each provided with a main storage unit (13,23), an extended storage unit (14,24), an instruction processor (11,21) for making access to the main storage unit (13,23) or extended storage unit (14,24) through a storage control unit (12,22), and the storage control unit containing an interface control (15,25) for making communication between one central processing unit and another central processing unit are coupled with each other through the interface control, in which each of the central processing unit is operable by an independent operating system. In this system, the operating system for each of the instruction processor (11,21) permits an access to the extended storage unit (14,24) or each of the central processing units by specifying an identification number set for the extended storage unit thereof. This enables the extended storage unit to be shared in the system because the extended storage unit is accessible directly from each of the central processing units.

FIG.I

# MULTI-PROCESSOR SYSTEM

## BACKGROUND OF THE INVENTION

The present invention relates to a multi-processor system and, more particularly, to a multi-processor system capable of improving a system performance in a loosely coupled multi-processor system in which each of central processing units constituting the multi-processor system is operable by an independent operating system.

In order to improve performance of a data processing system, there is realized a multi-processor system in which plural central processing units constitute a system. The multi-processor system may be classified into two system structuring methods, namely, a tightly coupled multi-processor system and a loosely coupled multi-processor system by the difference of a coupling method of central processing units.

The loosely coupled multi-processor system, on the one hand, is a system in which plural systems (operable by independent operating systems) having independent central processing units and main storage units use a direct access storage device (DASD) and magnetic tape unit in common and they are operated by one system image by connecting them through a channel-to-channel adapter (CTCA). The tightly coupled multi-processor system, on the other hand, is a system in which plural central processing units uses one main storage unit in common and they are operated by one operating system.

The loosely coupled multi-processor system permits an easier extension of system and thus a construction of a larger system than the tightly coupled multi-processor system because each of the central processing units as a structuring element is operable by an independent operating system and they are connected to each other by a channel-to-channel adapter. The loosely coupled multi-processor system also has the advantage that a central processing unit of a different type may be coupled because it is of a system construction in which communication is made through the channel-to-channel adapter between each of the central processing units by a common standard interface.

In the loosely coupled multi-processor system in which such a channel-to-channel adapter connects the central processing units to each other, limits are placed on improvement in a system performance on account of a small throughput of data transfer of an input/output interface of an input/output channel and, when communication is made from one central processing unit to another, an overhead in generating of an input/output instruction by an operating system of the central processing unit as a transmitting source, an overhead in software processing by the operating system thereof on a receiving side, and the like.

In order to improve these disadvantages, for example, Japanese Patent Publication (examined) No. 61-25,179/1986 proposes a multi-processor system in which a common memory area is provided in the main storage unit in a processor and each of the processors is provided with a processor-to-processor communication function. Thus this multi-processor system enables a direct access of one processor to the main storage unit in another central processing unit having the common memory area through the proccessor-to-processor communication function, however, the common memory area in this system suffers the disadvantage that its capacity is small because it takes advantage of an area portion of the main storage unit.

A data processing system of a system construction with an extended storage unit for extending a memory area of the main storage unit is disclosed, for example, in U. S. Patent No. 4,476,524 (a counterpart of Japanese Patent Publication (laid-open) No. 58-9,276/1983). This data processing system is provided with a page storage unit as an extended storage unit, which is used exclusively for the central processing unit with which it is provided. Accordingly, this construction allows no direct access of a processor in a central processing unit to the page storage unit as the extended storage unit in another central processing unit.

For the loosely coupled multi-processor system, a general method for a system construction is such that a data transfer between each of central processing units is made through channels using the channel-to-channel adapter. As have been described, however, this multi-processor system through the channel coupling poses problems with improvements in a system performance because of a small throughput in a channel interface of the channel-to-channel adapter and requirements for software processing in input/output activation and interruption for the central processing units on the data transmitting and receiving sides. For these reasons, for example, the multi-processor system disclosed in Japanese Patent Publication No. 61-25,179/1986 is provided with the common memory area in the main storage unit in a certain central processing unit permitting a direct access of another central processing unit to this central processing unit through an interface control portion, thus leading to an improvement in system performance.

It is to be noted, however, that this construction of the multi-processor system does not allow a provision of a common memory area with a large memory capacity because the common memory area is provided in a portion of the main storage in a certain central processing unit, thus storing no data of a large capacity in such a common memory area. For this reason, when data of a large capacity is to be processed in common by plural processors, a frequent communication between the processors is required or a data transfer through a channel-to-channel adapter should be made, thus giving rise to no improvement in performance of data processing for the system.


SUMMARY OF THE INVENTION


Therefore, the present invention has the first object to provide a multi-processor system which enables sharing data of a large capacity in a state of direct access between each of the central processing units, thus improving performance of the multi-processor system.

The present invention also has the second object to provide a multi-processor system in which each of the central processing units share data of a large capacity so as to be stored in each of their extended storage units enabling direct access of each of the central processing units to the extended storage unit of another central processing unit, thus improving performance of the multi-processor system.

The present invention further has the third object to provide a multi-processor system in which each of the central processing units makes access to data of a large capacity stored in each of the extended storage units permitting a ready transfer control of data transfer for reading and writing and the central processing units share data of a large capacity, improving performance of the multi-processing system.

In order to achieve the objects, the present invention consists of a multi-processor system comprising a plurality of processors each of which is provided with an extended storage and with an access means for allowing one processor to make access to said extended storage provided in another processor.

Furthermore, in order to achieve the objects, the present invention consists of a multi-processor system in which central processing units each provided with a main storage unit, an extended storage unit, an instruction processor for making access to said main storage unit or said extended storage unit through a storage control unit, and said storage control unit containing an interface control for making communication between one central processing unit and another central processing unit are coupled with each other through said interface control, comprising an identification means for identifying said extended storage unit by a preset identification number for the extended storage unit of each central processing unit; and an access means for making access to the extended storage unit by an identification number of the extended storage unit.

The multi-processor system according to the present invention further comprises a common clock generating means for generating a common clock, which is characterized in that, when data transfer of data stored in the extended storage unit in the another central processing unit is made by making the interface control a communication to the another central processing unit, the data transfer is carried out between the central processing units by operating in the same time system the another central processing unit for making a communication to its own central processing unit through the common clock enabling access to data in the extended storage unit in the another central processing unit.

In the multi-processor system according to the present invention, each of the central processing units is provided with the main storage unit, the extended storage unit, the instruction processor for making access to the main storage or extended storage unit through the storage control unit, and the storage control unit containing the interface control for making a communication to the another central processing unit. The plural central processing units are coupled by the interface control of the storage control unit permitting a provision of a loosely coupled multi-proscessor system. Each of the central processing units is operable by the independent operating system. For the extended storage unit equipped in each of the central processing units is set an identification number so as to allow the operating system for each of the central processing units to make access to the extended storage unit concerned by specifying the identification number of the extended storage unit. For the multi-processor system according to the present invention, the extended storage units storing data of a large capacity to be used for data processing are made accessive by the operating system operable independently in each of the central processing units, thus enabling a direct utilization of data in the extended storage units in common through the operating system of an arbitrary central processing unit.

More specifically, the operating system operable independently in each of the central processing units of the multi-processor system according to the present invention permits an implementation of direct data transfer using a processor-to-processor communication function through the interface control when the data transfer is carried out between the central processing unit to which access is made and the extended storage unit concerned by making access to each of the extended storage units and by specifying its identification number. When a communication is made between the processors through the interface control, the interface control is to operate the another central processing unit communicating with the self-central processing unit in the same time system using the common clock leading to operation of a series of data transfer. This permits a ready synchronization in data transfer and a removal of a loss in synchronization, compared with an asynchronous data transfer between central processing units.

As have been described hereinabove, the multi-processor system according to the present invention permits the sharing of data of a large capacity stored in the extended storge unit of each of the central processing units and allows each of the central processing units to make a ready access to an arbitrary extended storage unit, thus leading to improvements in performance of the multi-processor system.

BRIEF DESCRIPTION OF THE DRAWINGS

Other objects, features and advantages of the present invention will become apparent in the course of the description of the preferred embodiments which follows, with reference to the accompanying drawings, in which:

FIG. 1 is a block diagram showing the construction of an essential portion of a multi-processor system according to a first example of the present invention;

FIGS. 2a and 2b show one example of a format of data transfer instruction between a main storage unit and an extended storage unit;

FIG. 3 is a block diagram showing the construction of an essential portion of a logic control portion for allowing a central processing unit of a first processing system to make access to an extended storage of a second processing system, with stress placed on the internal construction of a storage control unit;

FIGS. 4a, 4b, 4c and 4d show another examples of format of data transfer instruction between the main storage unit and the extended storage unit;

FIG. 5 is a diagram explaining an address translation mechanism for implementing address translation from an extended storage relative address to an extended storage absolute address;

FIG. 6 is a block diagram showing the construction of an outline of a multi-processor system according to another example of the present invention;

FIG. 7 is a diagram explaining the construction of a common clock feed system in data transfer of a multi-processor system according to an example of the present invention; and

FIG. 8 is a diagram explaining another example of the construction of a common clock feed system in data transfer of the multi-processor system.

DETAILED DESCRIPTION OF THE PREFERRED EMBODIMENTS

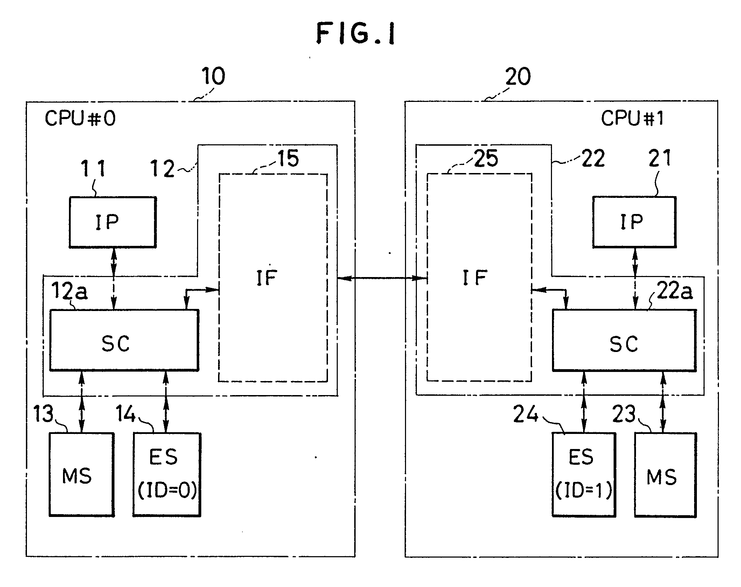

FIG. 1 is a block diagram showing the construction of the essential portion of the multi-processor system according to the first example of the present invention. Referring to FIG. 1, there is shown a loosely coupled multi-processor system comprising two central processing units, in which reference numeral 10 is a central processing unit of a first processing system (CPU#0). The central processing unit 10 comprises .an instruction processor (IP) 11 for executing instruction processing, a storage control unit (SC) 12, a main storage unit (MS) 13, and an extended storage unit (ES) 14. The storage control unit 12 contains storage controls 12a and interface controls (IF) 15. As shown in FIG. 1, reference numeral 20 is a central processing unit of a second processing system (CPU#1) which comprises an instruction processor 21, a storage control unit 22, a main storage unit 23, and an extended storage unit 24. The storage control unit 22 contains storage controls 22a and interface controls 25. For the extended storage unit 14 of the first processing system, an identification number ESID is set at "ESID = 0" while an identification number ESID is set at "ESID = 1" for the extended storage unit 24 of the second processing system. Each of the interface controls 15, 25 is to implement interface control for data transfer between each of the central processing units. The interface controls comprise, for example, hardware circuits for carrying out data transfer at high speeds and are realized which each contains various functions executed by the storage control unit 12.

For the multi-processor system, data transfer between the main storage and extended storage units is classified into two forms, a synchronous transfer and an asynchronous transfer. The data transfer of a synchronous transfer form is such that the instruction processing of an instruction processor starts by executing an instruction word and the data transfer is carried out during the execution. In this case, when the instruction processing for data transfer is executed, the instruction processor is in a wait state and no following instruction processing is executed until the processing of data transfer completes. In other words, the data transfer is carried out in synchronization with the execution so that this is called an asynchronous transfer. On the other hand, data transfer of an asynchronous transfer form is such that data transfer starts with command of a channel command word (CCW) for executing input/output processing by an input/output instruction such as start I/O, start subchannel and the like in asynchronization with the execution by the instruction processor. Thus the data transfer of this type is called an asychronous transfer.

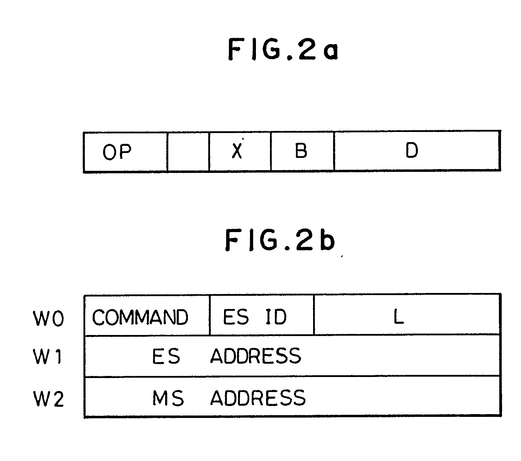

FIGS. 2a and 2b show an example of a format of a synchronous transfer instruction between the main storage unit and the extended storage unit.

As shown in FIG. 2a, data transfer instruction is of the type specifying an instruction code and a 1 operand on the main storage. An operand to be designated on the main storage is constituted by three words (W0, W1, W2) as shown in FIG. 2b. More specifically, each word of the three words (W0 word, W1 word, W2 word) constituting the operand stores a designation control data for data transfer. W0 word is stored the kinds of data transfer, that is, a command (COMMAND) for indicating data transfer from the main storage to the extended storage or vice versa, an identification number (ESID) for designating the extended storage unit as an object for data transfer, and a data amount (L) to be transferred. W1 word is stored an extended storage address (ES ADDRESS) of data transfer source or data transfer receiving side, and W2 word is stored a main storage address (MS ADDRESS) of data transfer source or data transfer receiving side.

Operation of data transfer between the main storage unit and the extended storage unit will be described with reference to FIGS. 2a and 2b. First, a description will be described on operation in which the central processing unit 10 executes data transfer between the main storage unit 13 and the extended storage unit 14 in the first processing system (CPU#0). The instruction processor 11 is to direct data transfer between the extended storage and the main storage to the storage controls 12a when instruction indicated in FIG. 2a is read from the main storage unit 13. When data transfer processing starts, the instruction processor 11 reads an operand code as shown in FIG. 2b and sends the identification number ESID of command and extended storage, the data amount to be transferred, and the main storage address to the storage controls 12a. In this case, ESID sent to the storage controls 12a is "0" so that the extended storage as an object directs the extended storage unit 14 provided in the central processing unit 10 of the first processing sysytem (CPU#0). When ESID is "1", the extended storage as an object directs the extended storage unit 24 provided in the central processing unit 20 of the second processing system (CPU#1). In this case, the storage control unit 12 is to carry out data transfer between the corresponding extended storage unit 24 and the main storage unit 13 in accordance with the designated address through the storage control unit 22 by the interface control 15. This data transfer will be described.

When command of data transfer instruction to be executed in the central processing unit 10 of the first processing system (CPU#0) is a store for the extended storage unit 24 of the second processing system (CPU#1), the storage control unit 12 is to set a data transfer request, extended storage address, and transfer data at the interface control 15. The interface control 15 is to transmit these transfer control data to the central processing unit 20 of the second processing system (CPU#1) and to set it at the interface control 25 in the storage control unit 22. This arrangement permits a transmission of these transfer control data from the interface control 25 to the storage controls 22a and the storage control unit 22 executes data transfer between the main storage unit 13 of the first processing system (CPU#0) and the extended storage unit 24 of the second processing system (CPU#1) on the basis of given transfer control data. In other words, if command is to direct a store to the extended storage unit 24, operation completes after transfer data is stored in the extended storage unit 24 by the extended storage address set in the interface controls 25.

If a command for data transfer instruction to be executed by the central processing unit 10 of the first processing system (CPU#0) is to direct the data reading from the extended storage unit 24 of the second processing system (CPU#1), the storage control unit 22 reads data with the extended storage address directed and sets the data at transmit control in the interface controls 25. At this time, the interface control 25 sets a data transfer request for directing a data store to the main storage unit 13 to which the data is transmitted and the extended storage address is set. These data are those transmitted from the interface controls 15 to the interface controls 25. The data read from the extended storage unit 24 is set at the interface controls 15 through the interface controls 25. Then the storage controls 12a direct writing of data to the main storage unit 13 and, as the writing completes, reading operation to the extended storage unit 24 activated by the central processing unit 10 ends. Operation for executing data transfer of this type from the central processing unit 20 of the second processing system (CPU#1) is the same as those have been described hereinabove.

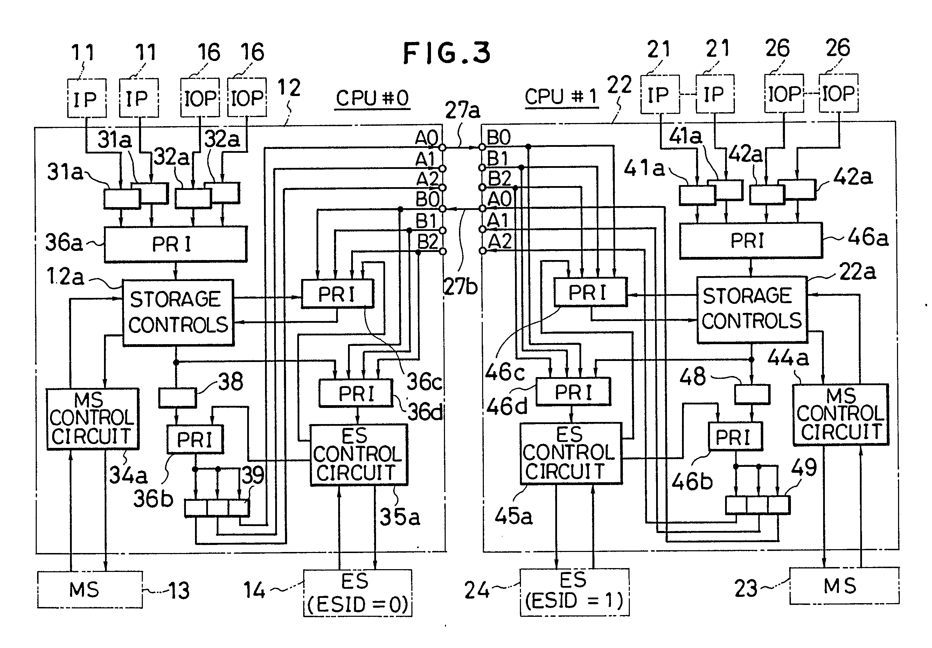

FIG. 3 is a block diagram showing the construction of a detail part of the logic control portion for making access from the central processing unit of the first processing system to the extended storage unit of the second processing system, with stress placed on the internal construction of the storage control unit (SC) in the first example. The same elements are provided with the same reference numerals as in FIG. 1. The interface controls 15 correspond to priority determining circuits 36b, 36c, 36d and registers 38, 39.

Referring to FIG. 3, a description will then be made on the synchronous transfer of data from the main storage to the extended storage and the synchronous transfer of data from the extended storage to the main storage.

In the case of the former, the instruction processing unit 11 reads an instruction as shown in FIG. 2a from the main storage unit 13, decode COMMAND, and understands an operation direction to the extended storage from the main storage. At this time, the instruction processor 11 transmits this operation direction request as well as the main storage data address (R1), ESID, extended storage address, and number of transfer data (L) to the register 31a. The priority determining circuit is to select one of the requests from plural instruction processors (IPs) 11 and input-output processors (IOPs) 16 in accordance with a predetermined priority. The request and the accompanying data enter the storage controls 12a after passage through a priority determining circuit (PRI) 36a. The storage control 12a is to transmit the main storage data address to a MS control circuit 34a and to read data corresponding to one unit from the main storage unit 13. The storage control 12a then transfers the read data to the extended storage. In this case, if an ESID of the extended storage absolute address is "ESID = 0", a write request, an extended storage block address, and main storage data are transmitted to a priority determining circuit (PRI) 36d. After selection of this request, the PRI 36d then transmits the request and the accompanying data to an ES control circuit 35a which, in turn, stores the main storage data in the extended storage unit 14 and make a report of this completion to the storage controls 12a through a priority determining circuit (PRI) 36c. The storage controls 12a then investigate the number of transfer blocks and execute the data transfer from the main storage to the extended storage in substantially the same manner of operation as have been described hereinabove until the data to be transferred becomes null if the transfer data is left yet untransferred.

The following is a description on operation when an ESID of the extended storage absolute address is "ESID = 1". After data of one unit is read from the main storage unit 13, when it is recognized that the ESID of the extended storage unit to which the read data is transferred is "1", the storage control 12a transmits an extended storage block address, a write data, and a write request to an input port B0 of CPU#1 through an interface 27a from an output port A0 of CPU#0 via the register 38, the priority determining circuit (PRI) 36d, and the register 39. The request and the accompanying data enter the ES control circuit 45a through the priority determining circuit (PRI) 46d. After data of one unit is written in the extended storage unit 24, the ES control circuit 45a transmits the completion of the writing to the input port B0 of CPU#0 from the output port A0 of CPU#1 through the interface 27b. CPU#0 inputs this data through PRI 36c into the storage controls 12a which, in turn, investigate the number of transfer data from this data and execute the data transfer from the main storage unit 13 to the extended storage unit 24 by continuing the data transfer processing in substantially the same procedures as above until all of the data to be transferred become null if the data to be transferred is still left yet untransferred.

Operation of the synchronous transfer (reading of the extended storage) of data from the extended storage unit to the main storage unit will now be described. In this case, the instruction processor 11 is operated in substantially the same manner as have been described hereinabove until a data transfer request for transfer from the extended storage to the main storage, a main storage data address, an extended storage address, and a number of transfer data are transmitted to the register 31a. The request and the accompanying data enter the storage controls 12a after passage through PRI 36a, and the storage controls 12a transmit an extended storage address and a read request to the ES control circuit 35a through PRI 36d if ESID = 0 as a result of investigation of the extended storage absolute address. The ES control circuit 35a reads data of one unit and transmits a report of the data and the write end to the storage controls 12a through PRI 36c. The storage controls 12a then send this data and the main storage data address to the MS control circuit 34a and write the data in the main storage unit 13. The MS control circuit 34a reports the write end to the storage controls 12a which, in turn, investigate the number of transfer data and execute the data transfer from the extended storage unit 14 to the main storage unit 13 until the transfer data becomes null if it is left yet untransferred.

Operation will further be described when the ESID of the extended storage absolute address is "ESID = 1". After it recognizes that ESID is "1", the storage controls 12a transmit an extended storage address and a data transfer request to the input port BO of CPU#1 from the output port AO of CPU#0 through the interface 27a via the register 38, PRI 36b, and the register 39. The request and the accompanying data enter the ES control circuit 45a through PRI 46d. The ES control circuit 45a reads data from the extended storage unit 45 and transmits the data and a read end report to the input port BO of CPU#0 through the interface 27b from the output port AO of CPU#1 via PRI 46b and the register 49. The data and the end report enter the storage controls 12a through PRI 36c. The storage controls 12a transmit the main storage data address, data, and a data transfer request to the MS control circuit 34a which, in turn, writes the data and then transmits the write end report to the storage control 12a. The storage control 12a then investigate the number of transfer data and, if the transfer data is left yet untransferred, execute the data transfer from the extended storage unit 24 to the main storage unit 13 in the same manner of procedures as above until the transfer data becomes null while continuing the writing of data.

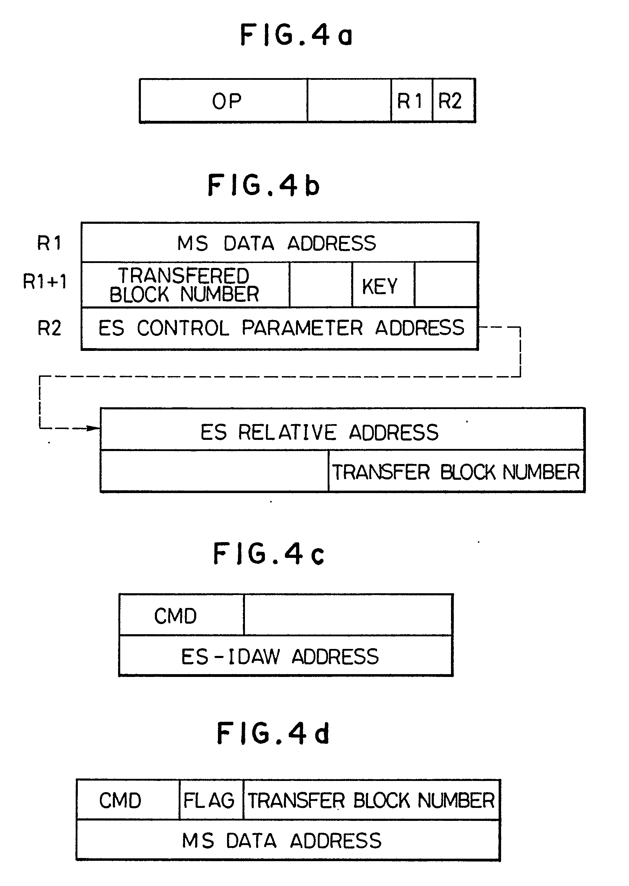

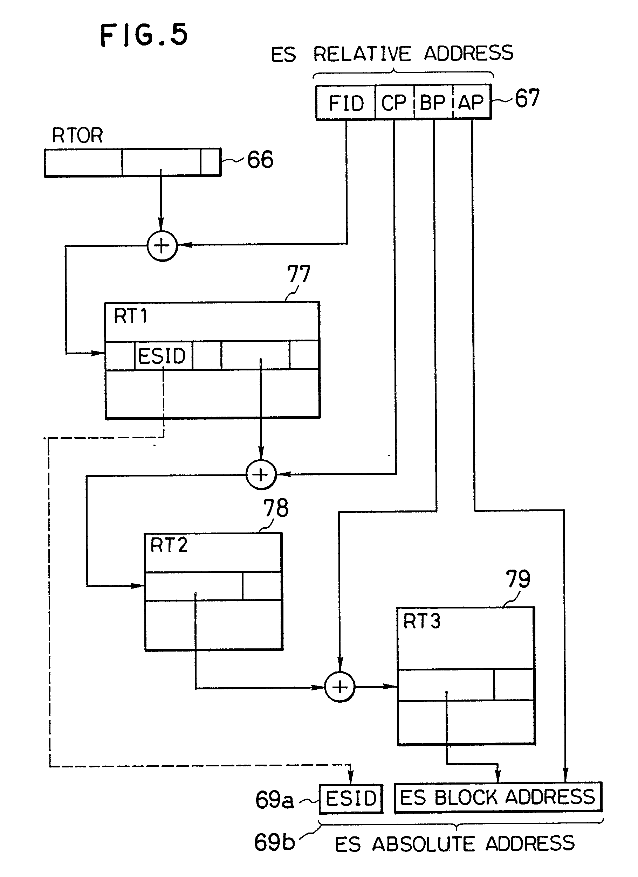

As shown in FIG. 4a, the data transfer instruction in this example is of a type where there are designated an instruction code OP and two registers R1 and R2. As shown in FIG. 4b, contents of the resgisters R1 and R2 are such that a main storage data address is stored in the address R1 and the number of data which have been already transferred and a key for reference to the main storage are stored during the data transfer at register R1 + 1 of the next address. In this example, a size of blocks of the main storage unit is 4KB. In the register R2, there is stored an ES control parameter address to point a storage area address of an ES control parameter in order to designate the ES control parameter on the main storage. The ES control parameter is to set an extended storage relative address and the number of data to be transferred and stored in a storage area as shown in the lower portion of FIG. 4b. In this example, an address of the extended storage during the synchronous transfer is not an absolute address because of prevention of a fragmentation in the extended storage, but a relative address. The step of translating the relative address into the absolute address is carried out by means of an address translation mechanism with reference to a three-stage address translation table. This step will be described with reference to FIG. 5.

FIG. 5 is a diagram explaining the address translation mechanism from the extended storage relative address to the extended storage absolute address.

The extended storage relative address is stored in an extended storage relative address register 67. A top address of a first relocation table 77 is stored in a relocation table origin register (RTOR) 66. An ESID 69a is determined from the first relocation table 77 by adding a FID (file ID) field of the top address to that of the extended storage relative address and referring to the first reloction table 77, and at the same time a start address of a second relocation table 78 is given. Then by adding Cp (C field) of the top address of the second relocation table 78 to that of the extended storage relative address and referring to the second relocation table 78, a top address of a third relocation table 79 is given. Then to the top address of the third relocation table 79 is added a Bp (B field) of the extended storage relative address, and a portion of the extended storage absolute address in the third relocation table 79 is determined with reference to the third relocation table 79. This is then coupled to an Ap (A field) of the extended storage relative address yielding an extended storage absolute address 69b.

As have been described hereinabove, users can utilize an extended storage having the ESID even if they do not recognize where a file they intend to use is present in the extended storage of which CPU.

Referring to FIG. 3, a description will then be made on the synchronous transfer of data from the main storage to the extended storage and the synchronous transfer of data from the extended storage to the main storage on the basis of the instruction of this example.

In the case of the sunchronous transfer of data from the main storage to the extended storage, the instruction processor 11 reads an instruction as shown in FIG. 4a from the main storage unit 13, decodes an operation code (OP), and understands a direction of operation to the extended storage from the main storage. At this time, the instruction processor 11 transmits this operation direction request as well as the main storage data address (R1) as shown in FIG. 4b, the extended storage absolute address as a result of translation of the extended storage relative address (ESID and extended storage block address: FIG. 5), and number of transfer data to the register 31a. The request and the accompanying data enter the storage controls 12a after passage through a priority determining circuit (PRI) 36a. The storage controls 12a are to send the main storage data address to a MS control circuit 34a and to read data corresponding to one unit from the main storage unit 13. The storage controls 12a then transfer the read data to the extended storage. In this case, if an ESID of the extended storage absolute address is "ESID = 0", a write request, an extended storage block address, and data of one unit is sent to a priority determining circuit (PRI) 36d. After selection of this request, the PRI 36d then sends the request and the accompanying data to an ES control circuit 35a which, in turn, stores the main storage data in the extended storage unit 14 and make a report of this completion to the storage control 12a through a priority determining circuit (PRI) 36c. The storage controls 12a then investigate the number of transfer data and execute the data transfer from the main storage to the extended storage in substantially the same manner of operation as have been described hereinabove until the data to be transferred becomes null if the transfer data is left yet untransferred.

The following is a description on operation when an ESID of the extended storage absolute address is "ESID = 1". If ESID = 1 as a result of translation of extended storage relative address, after data of one unit is read from the main storage unit 13, the storage controls 12a transmit an extended storage block address, a write data, and a write request to an input port B0 of CPU#1 through an interface 27a from an output port A0 of CPU#0 via the register 38, the prirority determining circuit (PRI) 36d, and the register 39. The request and the accompanying data enter the ES control circuit 45a through the priority determining circuit (PRI) 46d. After data of one unit is written in the extended storage unit 45, the ES control circuit 45a transmits the end of the writing to the input port B0 of CPU#0 from the output port A0 of CPU#1 through the interface 27b. CPU#0 inputs this data through PRI 36c into the storage controls 12a which, in turn, investigate the number of transfer data from this data and execute the data transfer from the main storage unit 13 to the extended storage unit 24 by continuing the data transfer processing in substantially the same priority as above until all of the data to be transferred become null if the data to be transferred is still left yet untransferred.

Operation of the synchronous transfer of data from the extended storage unit to the main storage unit will now be described. In this case, the instruction processor 11 is operated in substantially the same manner as have been described hereinabove until a data transfer request for transfer from the extended storage to the main storage, a main storage data address, an extended storage absolute address, and a number of transfer data are transmitted to the register 31a. The request and the accompanying data enter the storage controls 12a after passage through PRI 36a, and the storage controls 12a transmit an extended storage block address and a read request to the ES control circuit 35a through PRI 36d if ESID = 0 as a result of investigation of the extended storage absolute address. The ES control circuit 35a reads data of one unit and sends a report of the data and the write end to the storage controls 12a through PRI 36c. The storage controls 12a then send this data and the main storage data address to the MS control circuit 34a and report the write end to the storage controls 12a which, in turn, investigate the number of transfer data and execute the data transfer from the extended storage unit 35 to the main storage unit 13 until the transfer data becomes null if it is left yet untransferred.

Operation will be described when the ESID of the extended storage absolute address is "ESID = 1". After it recognizes that ESID is "1", the storage controls 12a send an extended storage block address and a read request to the input port BO of CPU#1 from the output port AO of CPU#0 through the interface 27a via the register 38, PRI 36c, and the register 39. The request and the accompanying data enter the ES control circuit 45a through PRI 46d. The ES control circuit 45a reads data from the extended storage unit 45 and transmits the data and a read end report to the input port BO of CPU#0 through the interface 27b from the output port AO of CPU#1 via PRI 46b and the register 49. The data and the end report enter the storage controls 12a through PRI 36c. The storage controls 12a transmit the main storage data address, data, and a write request to the MS control circuit 34a which, in turn, writes the data and then transmits the write end report to the storage controls 12a. The storage controls 12a then investigate the number of transfer data and, if the transfer data is left yet untransferred, execute the data transfer from the extended storage unit 45 to the main storage unit 34 in the same manner of procedures as above until the transfer data becomes null while continuing the writing of data.

The data transfer of the asynchronous transfer form will then be described with reference to FIGS. 4c and 4d.

As shown in FIGS. 4c and 4d, a channel command word (CCW) to be used for the asynchronous transfer comprises a setup CCW (FIG. 4c) and an execution CCW (FIG. 4d). The setup CCW is to specify, for example, a preparation for writing in the extended storage or for reading by means of a command field CMD and to indicate an address (ES-IDAW address) of an indirect data address word (IDAW) for the extended storage on the main storage. The format of this IDAW is of the same type of the extended storage absolute address shown in FIG. 5. The execution CCW is to direct the execution of a command of the setup CCW and to specify flag, number of transfer data, and main storage data address.

In the asynchronous transfer, although the input-output processors 16 and 26 start the data transfer in place of the instruction processors 11 and 21, other operation for data transfer using the storage control units 13 and 23 is the same as in the case of the synchronous transfer. The input-output processor 16 reads CCW (FIG. 4c) from the main storage unit 13 and then transmits the command as a setup command and an extended storage absolute address in the ES-IDAW to the register 32d. Then, as CCW of FIG. 4d is chained with an address of CCW of FIG. 5c, the input-output processor 16 transmits a command (execution command) by reading CCW in FIG. 4d, a number of transfer blocks, and the main storage data address to the register 32a. Thereafter, the request, the main storage address, the extended storage address, and the number of transfer blocks are transmitted to the storage controls 12a from the register 32a through PRI 36a. Following operation is the same as in the case of the synchronous transfer.

Although the above example is directed to the multi-processor system constituted by two central processing units, a multi-processor system constituted by three central processing units or more may be constructed in substantially the same as above by connecting the central processing units to each other.

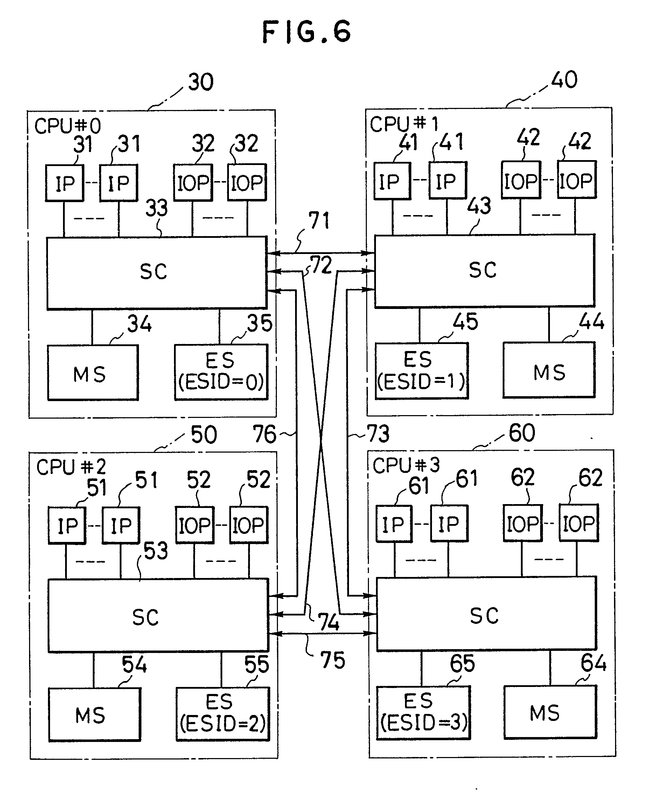

FIG. 6 is a block diagram showing an overall outline of the multi-processor system according to another example of the present invention. FIG. 6 shows an example showing a loosely coupled multi-processor system constituted by four central processing units. As shown in FIG. 6, reference numeral 30 stands for a central processing unit of the first processing system (CPU#1), which comprises an instruction processor (IP) 31, an input-output processor (IOP) 32, a storage control unit (SC) 33, a main storage unit (MS) 34, and an extended storage unit (ES) 35. Furthermore, reference numeral 40 stands for a central processing unit of the second processing system (CPU#2), 50 for a central processing unit of the third processing system (CPU#3), and 60 for a central processing unit of the fourth processing system (CPU#4). Like the central processing unit 30 of the first processing system (CPU#1), each of the central processing units 40, 50, 60 comprises, respectively, an instruction processor (IP) 41, 51, 61, an input-output processor (IOP) 42, 52, 62, a storage control unit (SC) 43, 53, 63, a main storage unit (MS) 44, 54, 64, and an extended storage unit (ES) 45, 55, 65. The four central processing units are connected to each other by interfaces 71, 72, 73, 74, 75, 76 through the storage control units 33, 43, 53, 63 in order to refer to data stored in the respective extended storage units of the other central processing unit.

An interconnection of these interface 71, 72, 73, 74, 75, 76 can be realized by input ports Ao, A1, A2 and output ports Bo, B1, B2 as shown in FIG. 3.

In the example as shown in FIG. 3, the data transfer between CPU#0 and CPU#1 has been caried out using the output port Ao and the input port Bo of CPU#0 as well as the input port Bo and the output port Ao of CPU#1 only. Data transfer between CPU#0 and CPU#2 or CPU#3 may be carried out in substantially the same manner. More specifically, data transfer between CPU#0 and CPU#2 or CPU#3 may be implemented in the same manner as in the data transfer between CPU#0 and CPU#1, using output ports A1 and A2 as well as input ports B1 and B2 of CPU#0. Data transfer for access to an extended storage may be carried out in the same manner between other central processing units.

As have been described hereinabove, data transfer between plural central processing units in a loosely coupled multi-processor system can be carried out by coupling input ports and output ports of the storage control unit in each of the central processing units, in other words, by coupling their interface controls.

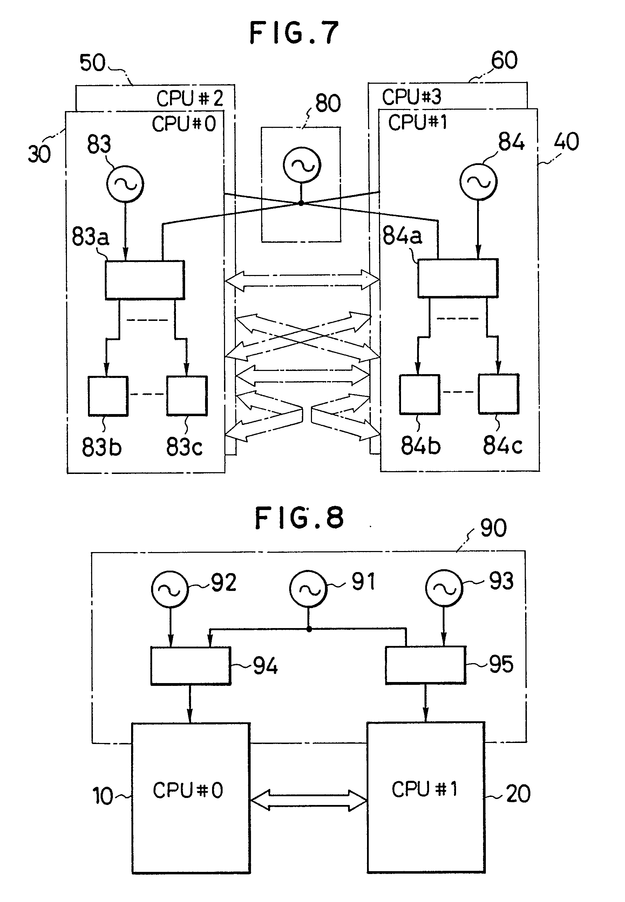

FIG. 7 is a diagram explaining the construction of the common clock feed system in data transfer of a multi-processor system according to one example of the present invention. The common clock feed system to be provided in the multi-processor system will be described with reference to FIG. 7. A common clock generator 80 for generating a clock as a reference time is installed in a equal distance between the central processing unit 30 of the first processing system (CPU#0), the central processing unit 40 of the second processing system (CPU#1), the central processing unit 50 of the third processing system (CPU#2), and the central processing unit 60 of the fourth processing system (CPU#3), and feeds a common clock specifying a machine cycle in each of the central processing units.

In the multi-processor system, the central processing unit as an element constituting the system is provided with an independent clock generator and each of the central processing units is operated in asynchronization with each other by a clock from the respectively own clock generator. As shown in FIG. 7, the central processing units 30 and 40 in the respective processing systems are provided each with clock generators 83 and 84 each of which, in turn, feeds a clock pulse specifying a machine cycle.

In carrying out the data transfer by execution of a data transfer instruction in the multi-processor system, operation can be implemented in an asynchronous sytem using a clock from each of the clock generators 83 and 84 of each central processing units 30 and 40, however, additional processing is required for synchronization processing. Accordingly, the multi-processor system in this embodiment is provided with the common clock generator 80 for generating a common clock in oder to operate data transfer between the central processing units 30 and 40 and a control over the data transfer without a loss in synchronization. The common clock generator 80 is mounted, for example, in a housing connecting the central processing units 30, 40, 50, and 60 to each other and installed at a position away in a equal distance from each of the units. A distribution of clock pulses to internal units 83b, 83c, and 84b, 84c of each of the central processing units 30 and 40 is carried out by pulse distributors 83a and 84a, respectively. The pulse distributors 83a and 84a are to carry out a control for selecting the common clock generator 80 for generating the common clock or for selecting their inherent clock generators 83 and 84 for the respective central processing units in order to synchronize operation of the two central processing units 30 and 40 implementing data transfer with each other. In processing the data transfer instruction, the data transfer between the central processing units 30 and 40 and the control over the data transfer can be operated without a loss in synchronization by specifying a machine cycle through the same clock and operating the two central processing units 30 and 40 using the common clock. Referring further to FIG. 7, a clock feed system of the central processing units 50 and 60 constituting the multi-processor system is not shown in the drawing and it may be operated using a common clock in substantially the same manner as that of the central processing units 30 and 40, thus operating data transfer between the corresponding central processing units and a control over the data transfer.

Although the clock feed system has been described with reference to the embodiment in which the multi-processor system is constituted by four central processing units, the clock feed system may be controlled in substantially the same manner in the multi-processor system constituted by two central processing units.

FIG. 8 is a diagram showing another example of the construction of a common clock feed system in data transfer of the multi-processor system. FIG. 8 shows an example of the structure of a common clock feed system in the data transfer of the multi-processor system which two central processing units constitute. The structure of the clock feed system to be disposed in the multi-processore system will be described with reference to FIG. 8. In this embodiment, there is a clock feed unit 90 for feeding a clock to the multi-processor system which is provided with a common clock generator 91 for specifying a machine cycle for implementing a common operation of the system for data transfer for operating the central processing unit 10 of the first processing system (CPU#0) and concurrently the central processing unit 20 of the second processing system (CPU#1).

In order to feed a clock to the multi-processor system constituted by the central processing units 10 and 20, the clock feed unit 90 comprises the common clock generator 91 for feeding a common clock to the system, clock generators 92 and 93 mounted in each of the central processing units 10 and 20 for feeding independent clocks, and pulse distributors 94 and 95. Each of the central processing units 10 and 20 is operated in asynchronization by feeding a clock from the clock generators 92 and 93 mounted therein.

More specifically, as shown in FIG. 8, each of the central processing units 10 and 20 is operated by a supply of a clock pulse specifying a machine cycle from the clock generators 92 and 93 or the common clock generator 91 of the clock feed unit 90. In implementing data transfer by execution of the data transfer instruction between the central processing units 10 and 20, operation may be executed in asynchronous system by a clock from the clock generators 92 and 93 corresponding each to the central processing units 10 and 20, however, additional processing is required for processing in synchronization. Thus, in order to operate the data transfer between the central processing units 10 and 20 and a control over the data transfer without a loss in synchronization, control over the data transfer is carried out using a clock from the common clock generator 91. A distribution of clock pulses to each of the central processing units 10 and 20 is carried out using the pulse distributors 94 and 95 which, in turn, are to carry out a control for selecting the common clock generator 91 or the clock generators 92, 93 corresponding to each of the central processing units in order to synchronize operation of the central processing unit 10 with that of the unit 20. In processing the data transfer instruction, operation of the central processing units 10 and 20 using the common clock from the common clock generator 91 permits an operation of the data transfer between the units 10 and 20 and a control over the data transfer without a loss in synchronization.

Although the present invention has been described as hereinabove by way of examples, it is to be understood that the present invention may be embodied in other specific forms without departing from the spirit and scope thereof. The present embodiments are therefore to be considered in all respects as illustrative and not restrictive, the scope of the invention being indicated by the appended claims, and all the changes, modifications and variations which come within the meaning and range of equivalency of the claims are therefore intended to be encompassed within the spirit and scope of the invention.

As have been described hereinabove, the multi-processor system according to the present invention enables a direct access of each of central processing units constituting the system to an arbitrary extended storage unit and permits sharing the extended storage in the system so that it presents the following advantages:

(1) A database stored in an external storage unit through an input-output processor unit such as a disk unit in a loosely coupled multi-processor system of a conventional type can be stored in an extended storage unit in common so that a rapid improvement in an access velocity can be expected. This can lead to improvements in a throughput of the system and a response time. And access to the extended storage by the synchronization instruction can dramatically decrease program steps compared with generation of an input/output instruction and an access to the extended storage. In this case, as no input/output interruption is generated, a processing step therefor is not required, too. Accordingly, improvements can be expected in the throughput of the system and the response time as a result of an increase in the program steps.

(2) Although data for fault recovery of a hot standby system is conventionally stored in a disk unit or the like which is shared between plural central processing units in a loosely coupled multi-processor system, the present invention permits a storage of such data for fault recovery in the common extended storage so that, even if a fault occurs in one of the central processing units, the processing can be taken over by another central processing unit with a higher speed than the conventional case because the data for fault recovery to be taken over is stored in the extended storage.

(3) In a tightly coupled multi-processor with a main storage in common, an increase in the number of instruction processor causes a competition with a common resource in the main storage so that an improvement in processing performance of the system cannot be expected for such an increase. However, as in the present invention, an application of a concept of the common extended storage system can improve a throughput of the system to a greater extent. In other words, the main storage is segmented into subunits and each of the segmented main storage is exclusively used for each of groups of instruction processors constituting a unit for each of instruction processors. Then the system is constructed such that data exchange necessary between the groups of the instruction processors is executed through the extended storage, thus improving a throughput of the system. As in the present invention, using a loosely coupled multi-processor with such a main storage in common as a central processing unit in the loosely coupled multi-processor system makes a system capable of further improving a throughput of the system.

## Claims

1. A multi-processor system comprising a plurality of processors each of which is provided with an extended storage and with an access means for allowing one processor to make access to said extended storage provided in another processor.

2. A multi-processor system as claimed in claim 1, wherein said access means starts by allowing said one processor to execute a transfer instruction.

3. A multi-processor system in which central processing units each provided with a main storage unit, an extended storage unit, an instruction processor for making access to said main storage unit or said extended storage unit through a storage control unit, and said storage control unit containing an interface control for making communication between one central processing unit and another central processing unit are coupled with each other through said interface control, comprising:
an identification means for identifying said extended storage unit by setting a preset identification number for the extended storage unit of each central processing unit; and
an access means for making access to the extended storage unit by an identification number of the extended storage unit generated by each of instruction processors.

4. A multi-processor system as claimed in claim 3, wherein:
a plurality of said central processing units are coupled with each other, each of said central processing units is operable by an independent operating system; and
said storage control unit of each of said central processing units is coupled with a plurality of said instruction processors and said input-output processors.

5. A multi-processor system in which central processing units each provided with a main storage unit, an extended storage unit, an instruction processor for making access to said main storage unit or said extended storage unit through a storage control unit, an input-output processor for making access to said main storage unit or said extended storage unit, and said storage control unit containing an interface control for making communication between one central processing unit and another central processing unit are coupled with each other through said interface control, comprising:

an identification means for identifying said extended storage unit by a preset identification number for the extended storage unit of each central processing unit; and

an access means for making access to the extended storage unit by an identification number of the extended storage unit generated by each of instruction processors or by each of input-output processors.

6. A multi-processor system as claimed in claim 5, wherein:

a plurality of said central processing units are coupled with each other, each of said central processing units is operable by an independent operating system; and

said storage control unit of each of said central processing units is coupled with a plurality of said instruction processors and said input-output processors.

7. A multi-processor system as claimed in claim 6, wherein:

said instruction processors and said input-output processors to be coupled with said storage control unit of the central processing unit are coupled with a storage control through a priority determining circuit, and

said storage control executes processing an access request from one of said instruction processors or one of said input-output processors in accordance with a priority one after another.

8. A multi-processor system as claimed in claim 1, further comprising:

a common clock generating means for generating a common clock; and

an extended storage access means for executing data transfer between said central processing units by allowing said interface control to operate one central processing unit as a transmit source and another central processing unit as a receiving side in the same time system by a common clock generated by said common clock generating means and to make access to data of the extended storage unit in said another central processing unit when data stored in said extended storage unit is subjected to data transfer by making communication with said another central processing unit.

9. A multi-processor system as claimed in claim 8, wherein said common clock generating means is disposed at a position away in a constant distance from each of said central processing units and feeds a common clock to each of said central processing units in executing data transfer between said central processing units.

10. A multi-processor system in which central processing units each provided with a main storage unit, an extended storage unit, an instruction processor for making access to said main storage unit or said extended storage unit through a storage control unit, an input-output processor for making access to said main storage unit or said extended storage unit, and said storage control unit containing an interface control for making communication between one central processing unit and another central processing unit are coupled with each other through said interface control, in which:

data stored in said extended storage unit is utilizable directly in common from an operating system of each of said central processing units by allowing said operating system independently operable in each of said central processing units to specify an identification number set for said extended storage unit of each central processing unit and to make access to said extended storage unit thereof.

11. A multi-processor system as claimed in claim 8, wherein:

said one central processing unit makes access to said extended storage unit of said another central processing unit by specifying its identification number; and

said interface control controls data transfer by a single common clock in the system when data transfer is executed between said central processing unit which makes access and said extended storage unit.

12. A multi-processor system as claimed in claim 9, wherein said interface control operates one central processing unit as a transmit source and another central processing unit as a receiving side in the same time system using said common clock to execute a series of data transfer operation in executing the data transfer through said interface control.

13. A multi-processor system as claimed in claim 2, wherein said transfer instruction contains a file identification number for specifying a file holding data to be transferred: and

said processor includes a translation means for translating the file identification number to an identification preset in the extended storage unit.

FIG.I

# FIG.2a

| OP | | X | B | D |
|----|--|---|---|---|

# FIG.2b

| | | | |
|----|----------|-------|---|
| W0 | COMMAND | ES ID | L |
| W1 | ES ADDRESS | | |
| W2 | MS ADDRESS | | |

EP 0 345 738 A2

# FIG. 3

EP 0 345 738 A2

# FIG.4a

| OP | | R1 | R2 |
|---|---|---|---|

# FIG.4b

| | |
|---|---|
| R1 | MS DATA ADDRESS |
| R1+1 | TRANSFERED BLOCK NUMBER / KEY |
| R2 | ES CONTROL PARAMETER ADDRESS |

| ES RELATIVE ADDRESS |
|---|
| TRANSFER BLOCK NUMBER |

# FIG.4c

| CMD | |
|---|---|
| ES - IDAW ADDRESS | |

# FIG.4d

| CMD | FLAG | TRANSFER BLOCK NUMBER |
|---|---|---|
| MS DATA ADDRESS | | |

# FIG.5

# FIG.6

# F I G.7

# F I G.8